# EUROPEAN PATENT APPLICATION

(11) **EP 4 832 333 A1**
(43) Date of publication of application: **28.10.2026**
(21) Application number: 24906997.2
(22) Date of filing: 12.11.2024
(51) Int. Cl.: H02M 7/48, H01G 2/02, H01G 4/32, H01G 4/228, H01G 13/00

(54) **INVERTER DEVICE AND METHOD FOR MANUFACTURING INVERTER DEVICE**

(30) Priority: 20.12.2023 JP 2023214405
(71) Applicant: Nidec Corporation, Minami-ku, Kyoto-shi, Kyoto 601-8205 (JP)
(72) Inventor: TAKAHARA, Yuta, Kyoto-shi, Kyoto 601-8205 (JP)
(74) Representative: Viering, Jentschura & Partner mbB Patent- und Rechtsanwälte
(86) International application number: PCT/JP2024/040220
(87) International publication number: WO 2025/134609

(57) **Abstract**

This inverter device comprises: a housing; a switching element that is attached to an inner surface of the housing; a capacitor that is attached to the inner surface alongside the switching element in a first direction, and that is connected to the switching element; a first bus bar that extends along the first direction to connect the switching element and the capacitor; a second bus bar that is positioned on a side opposite the inner surface with the first bus bar therebetween, and that extends along the first direction to connect the switching element and the capacitor; a first welding trace that extends on the first bus bar in a second direction intersecting the first direction; and a plurality of second welding traces that extend on the second bus bar in the second direction, and that are positioned on both sides sandwiching the first welding trace when viewed in a normal direction of the inner surface.

## Description

### Technical Field

The present invention relates to an inverter device and a method for manufacturing an inverter device.

### Background

Conventionally, as an inverter device for driving a high-output motor, an inverter device including a capacitor having a large capacitance of, for example, several hundred µF is known. The capacitor having such a large capacitance is implemented as, for example, a capacitor module in which a plurality of capacitor elements are connected, and is connected to a power module, which is a switching element in an inverter circuit, by using bus bars.

In the connection by the bus bars, it is necessary to suppress the occurrence of loop inductance, but in a case of bus bar connection by fastening with screws or the like, portions of the bus bars on a P side and an N side that cannot be opposed to each other are partially generated, thus increasing loop inductance. As bus bar connection that can suppress loop inductance, bus bar connection by welding is exemplified.

For example, US 2017/0133316 A discloses a technique of connecting capacitors and semiconductor devices by welding bus bars on a front surface side and a back surface side of each of the bus bars.

### Citation List

### Patent Literature

Patent Document 1: US 2017/0133316 A

### Summary

### Technical Problem

However, when the switching elements and the capacitors are connected by the technique of US 2017/0133316 A, the switching elements and the capacitors are mounted to the housing after being connected by the bus bars. Thus, stress is applied to a welded portion or the like of each bus bar at the time of mounting, and there is a risk of deformation or damage.

On the other hand, the switching elements and the capacitors are mounted in a positional relationship in which the front surface or the back surface of the flat bus bar faces the inner wall of the housing due to the mounting space or the like, and thus welding is difficult to perform from the front surface side and the back surface side, respectively, after the mounting.

Accordingly, an object of the present disclosure is to enable welding of bus bars after a switching element and a capacitor are mounted to a housing.

### Solution to Problem

According to an aspect of the present disclosure, there is provided an inverter device including a housing, a switching element mounted to an inner surface of the housing, a capacitor mounted to the inner surface side by side with the switching element in a first direction, the capacitor being connected to the switching element, a first bus bar extending along the first direction, the first bus bar connecting the switching element and the capacitor, a second bus bar located on a side opposite to the inner surface with the first bus bar interposed between the second bus bar and the inner surface, the second bus bar extending along the first direction, the second bus bar connecting the switching element and the capacitor, a first welding trace extending on the first bus bar in a second direction intersecting the first direction, and a plurality of second welding traces extending on the second bus bar in a direction along the second direction, the plurality of second welding traces being located on both sides of the first welding trace when viewed in a normal direction of the inner surface.

According to an aspect of the present disclosure, there is provided a method for manufacturing an inverter device including mounting a switching element and a capacitor to an inner surface of a housing as mounting, the capacitor being connected to the switching element side by side in a first direction, welding a first portion of a first bus bar on a side of the switching element and a second portion of the first bus bar on a side of the capacitor and thus forming the first bus bar as first welding, the first bus bar extending along the first direction and connecting the switching element and the capacitor, and welding a first portion of a second bus bar on a side of the switching element, a second portion of the second bus bar on a side of the capacitor, and a third portion connecting the first portion and the second portion at positions on both sides of a welded portion of the first bus bar when viewed in a normal direction of the inner surface as second welding, the second bus bar being located on a side opposite to the inner surface with the first bus bar interposed between the second bus bar and the inner surface, the second bus bar extending along the first direction and connecting the switching element and the capacitor.

### Advantageous Effects of Invention

According to the present disclosure, the bus bar can be welded after the switching element and the capacitor are mounted to the housing.

### Brief Description of the Drawings

FIG. 1 is a perspective view illustrating an inverter device.
FIG. 2 is a schematic side view illustrating the inside of a housing of the inverter device.
FIG. 3 is a view illustrating mounting in a method for manufacturing an inverter device.
FIG. 4 is a view illustrating first welding in the method for manufacturing the inverter device.
FIG. 5 is a view illustrating second welding in the method for manufacturing the inverter device.
FIG. 6 is a view illustrating an inverter device according to a first modified example.
FIG. 7 is a view illustrating an inverter device according to a second modified example.
FIG. 8 is a partially enlarged view illustrating second welding according to the second modified example.

### Detailed Description

Hereinafter, an embodiment of an inverter device and a method for manufacturing an inverter device of the present disclosure will be described with reference to the accompanying drawings. However, in order to avoid unnecessary redundancy of the following description and to facilitate understanding of those skilled in the art, unnecessarily detailed description may be omitted. For example, detailed description of well-known matters and redundant description of substantially the same configuration may be omitted. In addition, elements illustrated in a drawing described earlier may be referred to as appropriate in the description of a drawing that will be described below.

### Structure of Inverter Device 100

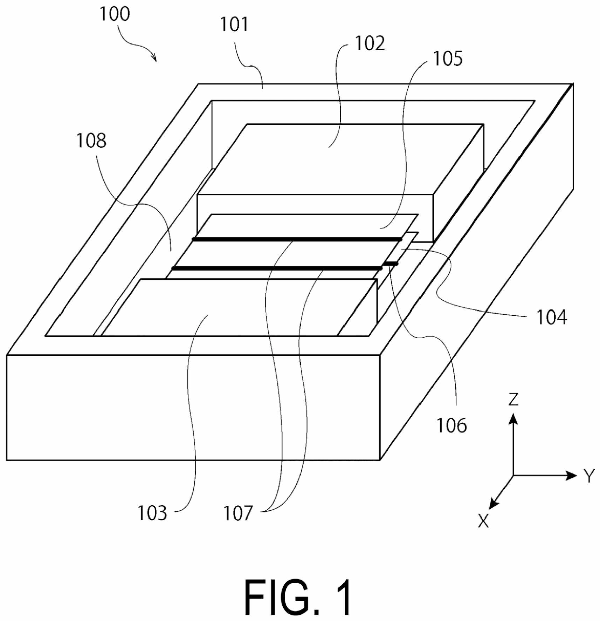

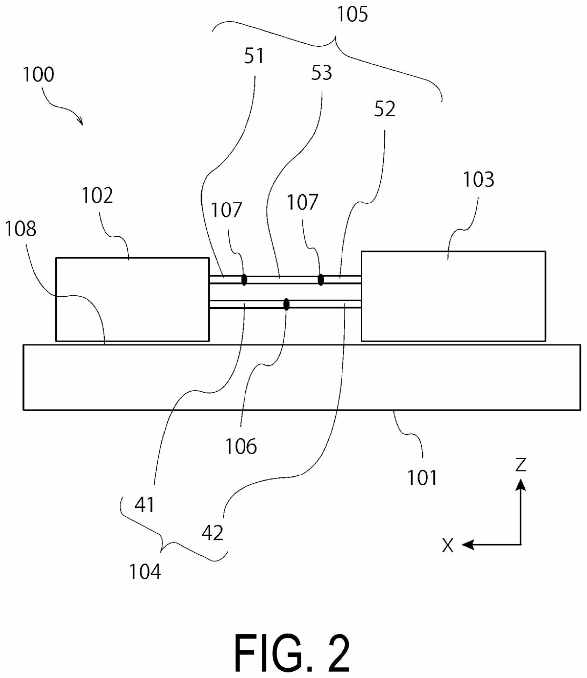

FIG. 1 is a perspective view illustrating an inverter device 100, and FIG. 2 is a schematic side view illustrating the inside of a housing of the inverter device 100. In FIG. 1 and FIG. 2, XYZ coordinates are represented for convenience of description of directions.

The inverter device 100 is a device that converts DC power supplied from, for example, a battery into AC power and supplies the AC power to, for example, a motor. The inverter device 100 may be incorporated in an electromechanical integrated motor, or may be a device separated from a supply target such as a motor.

The inverter device 100 includes a housing 101, a power module 102, and a film capacitor 103.

The housing 101 holds and protects elements disposed therein, and the internal space thereof may be closed by a lid or may be open without a lid. FIG. 1 illustrates a state without a lid as an example.

The power module 102 is a module in which a plurality of switching elements in an inverter circuit are modularized. The power module 102 is disposed inside the housing 101 and mounted to an inner surface of the housing 101, and in FIG. 1 and FIG. 2, as an example, the power module 102 is mounted to a bottom surface 108 located on a -Z side of the inner surface. Note that only the bottom surface 108 of the housing 101 is illustrated in FIG. 2.

The power module 102 may be directly mounted to the inner surface of the housing 101 by screws or the like, or may be indirectly mounted with spacers or jigs interposed therebetween.

The film capacitor 103 is a smoothing capacitor in an inverter circuit, and is formed by modularizing a plurality of capacitor elements in order to increase the capacitance. As the smoothing capacitor, an electrolytic capacitor may be used, but here, the film capacitor 103 having high durability is adopted. The film capacitor 103 is also disposed in the housing 101 and directly or indirectly mounted to the inner surface of the housing 101.

The power module 102 and the film capacitor 103 are arranged side by side in an X direction in the housing 101, for example, and are connected to each other by bus bars 104 and 105 to constitute an inverter circuit. Thus, the bus bars 104 and 105 extend along the X direction and connect the power module 102 and the film capacitor 103. Each of the bus bars 104 and 105 is, for example, a bus bar having a flat plate shape and extending along the bottom surface 108 to which the power module 102 and the film capacitor 103 are mounted. This suppresses loop inductance as compared with a case where each bus bar is not a bus bar having a flat plate and extending along the bottom surface 108.

As an example, of the bus bars 104 and 105, the bus bar located on the -Z side is a negative (N) bus bar 104, and the bus bar located on the +Z side is a positive (P) bus bar 105. In other words, one of the bus bars 104 and 105 that is closer to the bottom surface 108 is the N bus bar 104, and the other bus bar located on the opposite side of the bottom surface 108 with the N bus bar 104 interposed therebetween is the P bus bar 105.

The N bus bar 104 is formed by connecting a first portion 41 on the power module 102 side and a second portion 42 on the film capacitor 103 side by welding. Thus, a welding trace 106 in the N bus bar 104 extends on the N bus bar 104 in, for example, the Y direction intersecting the direction in which the power module 102 and the film capacitor 103 are arranged.

The P bus bar 105 is formed by connecting, by welding, a first portion 51 on the power module 102 side, a second portion 52 on the film capacitor 103 side, and a third portion 53 connecting the first portion 51 and the second portion 52. That is, the third portion 53 of the P bus bar 105 is located between the first portion 51 and the second portion 52. In addition, welding traces 107 of the P bus bar 105 extend on the P bus bar 105 along the direction in which the welding trace 106 of the N bus bar 104 extends, and are located on both sides of the welding trace 106 of the N bus bar 104 when viewed in the normal direction of the bottom surface 108. Thus, as will be described below, the N bus bar 104 and the P bus bar 105 can be welded after the power module 102 and the film capacitor 103 are mounted to the inner surface of housing 101.

When the bus bars 104 and 105 are welded before the power module 102 and the film capacitor 103 are mounted to the inner surface of the housing 101, the bus bars 104 and 105 may be deformed or damaged due to stress or the like at the time of mounting. Thus, it is required that the bus bars 104 and 105 are welded after the power module 102 and the film capacitor 103 are mounted.

The welding trace 106 of the N bus bar 104 is located at the center of the N bus bar 104 in the X direction in which the power module 102 and the film capacitor 103 are arranged, for example. This makes it possible to easily perform welding, compared with a case where the welding trace 106 is positioned toward one side of the power module 102 or the film capacitor 103.

In addition, the welding trace 106 of the N bus bar 104 is present at one position on the N bus bar 104 as an example, and the welding traces 107 of the P bus bar 105 are present at two positions on the P bus bar 105 as an example, suppressing loop inductance with a minimum amount of the welding traces 106 and 107.

### Method for Manufacturing Inverter Device 100

Next, a method for manufacturing the inverter device 100 will be described.

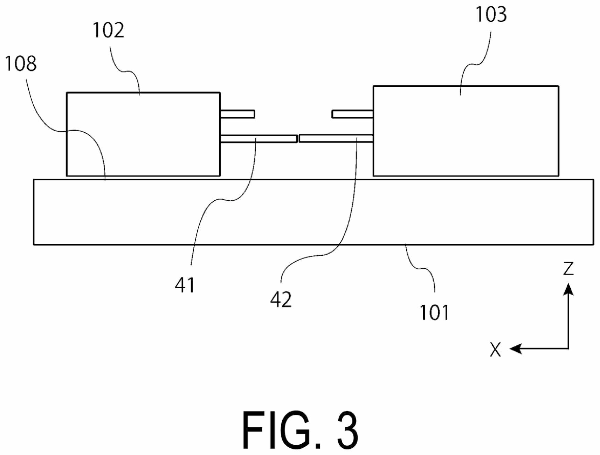

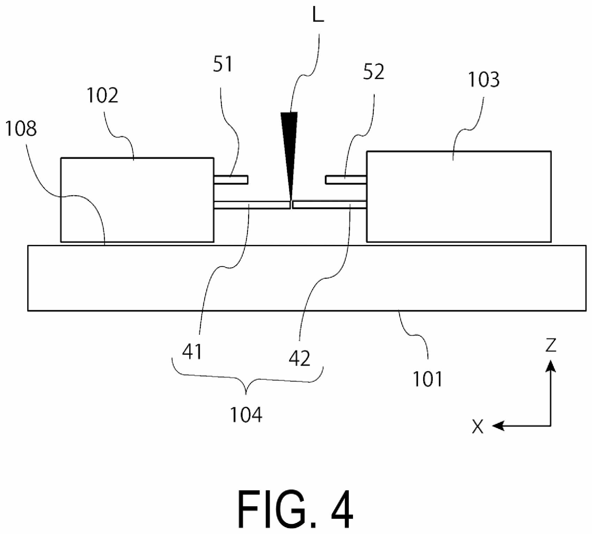

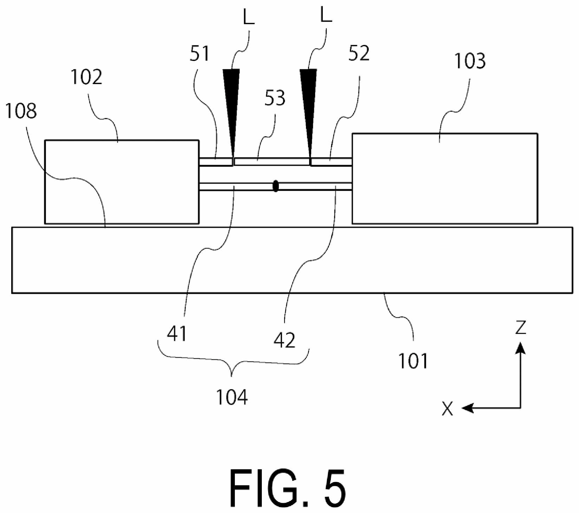

FIG. 3 to FIG. 5 are views illustrating respective processes in the method for manufacturing the inverter device 100. FIG. 3 illustrates mounting, FIG. 4 illustrates first welding, and FIG. 5 illustrates second welding.

In the mounting illustrated in FIG. 3, the power module 102 and the film capacitor 103 are mounted side by side in the X direction as an example to the bottom surface 108 as an example of the inner surface of the housing 101. At this time, the power module 102 and the film capacitor 103 are disposed such that tips of the first portion 41 and the second portion 42, which constitute the N bus bar 104, abut against each other or partially overlap each other.

In the first welding illustrated in FIG. 4, the first portion 41 and the second portion 42 are welded to each other to form the N bus bar 104. In the first welding, laser welding is used as an example. That is, the welding is performed by irradiating, with laser light L, a portion to be welded between the first portion 41 and the second portion 42, which constitute the N bus bar 104. The laser light L is irradiated to the N bus bar 104 from a side facing the bottom surface 108, and is irradiated through between the first portion 51 and the second portion 52, which constitute the P bus bar 105. Laser welding is easier to perform inside the housing 101 than other types of welding.

In the second welding illustrated in FIG. 5, the third portion 53 is disposed between the first portion 51 and the second portion 52 that constitute the P bus bar 105, and the first portion 51, the second portion 52, and the third portion 53 are welded. The portions to be welded in the second welding are portions on both sides of the welded portion in the first welding when viewed in the normal direction of the bottom surface 108. In the second welding as well, laser welding, which facilitates welding inside the housing 101, is used as an example. That is, a portion to be welded between the first portion 51 and the third portion 53 is irradiated with the laser light L and welded, and a portion to be welded between the third portion 53 and the second portion 52 is also irradiated with the laser light L and welded.

The inverter device 100 illustrated in FIG. 1 and FIG. 2 is obtained by performing the mounting, the first welding, and the second welding. Conversely, according to the inverter device 100 having the structure illustrated in FIG. 1 and FIG. 2, the first welding and the second welding can be performed after the mounting as described above. Thus, deformation and damage of the bus bars 104 and 105 are suppressed.

### Modified Examples

Next, modified examples of the inverter device 100 described above will be described.

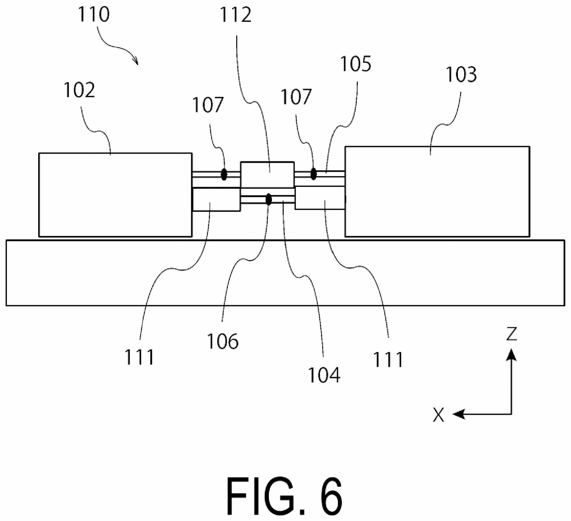

FIG. 6 is a view illustrating an inverter device 110 according to a first modified example.

The inverter device 110 of the first modified example differs from the inverter device 100 illustrated in FIG. 1 and FIG. 2 in that the inverter device 110 includes insulating materials 111 and 112. The insulating materials 111 and 112 insulate the bus bars 104 and 105 from each other. In the example illustrated in FIG. 6, the insulating materials 111 and 112 cover both the front surface and the back surface of the bus bars 104 and 105, but the insulating materials 111 and 112 need only cover the surfaces of the bus bars 104 and 105 facing each other.

The insulating material 111 of the N bus bar 104 covers a part of the entire width in the X direction. Additionally, the insulating material 112 of the P bus bar 105 covers the remaining part of the entire width of the P bus bar 105, the remaining part being a portion where the insulating materials 111 of the N bus bar 104 are not present. The insulating materials 111 of the N bus bar 104 and the insulating material 112 of the P bus bar 105 are alternately provided in the direction in which the power module 102 and the film capacitor 103 are arranged. Note that the insulating materials 111 of the N bus bar 104 and the insulating material 112 of the P bus bar 105 may partially overlap each other.

That is, the insulating material 111 of the N bus bar 104 covers a part of the entire width from the power module 102 to the film capacitor 103 on the surface of the N bus bar 104 facing the P bus bar 105. The insulating material 112 of the P bus bar 105 also covers a portion of the surface of the P bus bar 105 facing the N bus bar 104, the portion being the remaining part that is complementary to the above-described part of the N-bus bar 104. As a result, the bus bars 104 and 105 are insulated from each other by the minimum insulating materials 111 and 112.

The insulating materials 111 of the N bus bar 104 are provided at positions facing the welding traces 107 of the P bus bar 105 at the first portion 41 and the second portion 42 of the N bus bar 104, and do not reach the welding trace 106 of the N bus bar 104. Further, the insulating material 112 of the P bus bar 105 is provided at a position facing the welding trace 106 of the N bus bar 104 at the third portion 53 of the P bus bar 105, and does not reach the welding trace 107 of the P bus bar 105.

That is, the insulating materials 111 of the N bus bar 104 are provided at positions not overlapping the welding trace 106 of the N bus bar 104, and the insulating material 112 of the P bus bar 105 is provided at a position not overlapping the welding trace 107 of the P bus bar 105. Thus, the insulating materials 111 and 112 insulate the bus bars 104 and 105 from each other without interfering with welding in the first welding and the second welding described above.

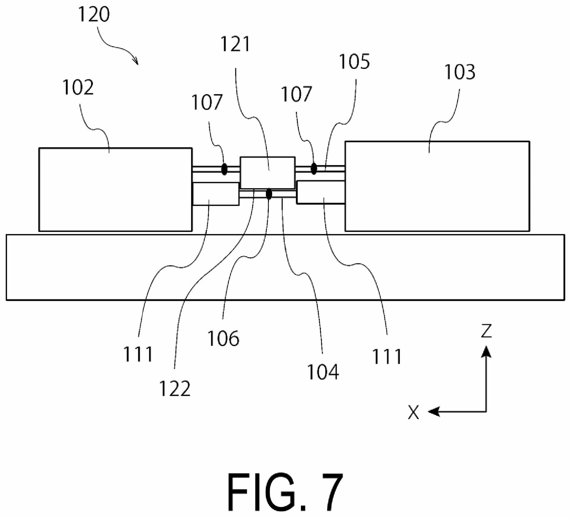

FIG. 7 is a view illustrating an inverter device 120 according to a second modified example.

The inverter device 120 of the second modified example also includes the insulating materials 111 and 121 as in the first modified example. On the other hand, in the second modified example, the insulating material 121 of the P bus bar 105 is thicker in the Z direction than that in the first modified example. Further, a surface 122 of the insulating material 121 of the P bus bar 105, the surface 122 facing the N bus bar 104, reaches the N bus bar 104. That is, the insulating material 121 of the P bus bar 105 is in contact with the N bus bar 104 on the surface 122 thereof. From another viewpoint, the thickness of the insulating material 121 of the P bus bar 105 on the N bus bar 104 side is a thickness corresponding to the distance between the P bus bar 105 and the N bus bar 104. As a result, as will be described below, the insulating material 121 of the P bus bar 105 serves as a support in the second welding.

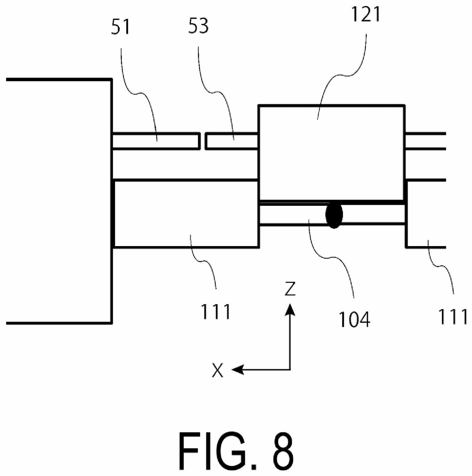

FIG. 8 is a partially enlarged view illustrating the second welding in the second modified example. FIG. 8 illustrates an enlarged view of the periphery of a portion to be welded between the first portion 51 and the third portion 53 of the P bus bar 105.

In the second modified example, in the second welding, welding is performed in a state where the third portion 53 of the P bus bar 105 is supported over the N bus bar 104 by the insulating material 121 of the P bus bar 105. Thus, it is not necessary to prepare another support or the like for supporting the third portion 53 in the Z direction, and the second welding is easily performed.

In addition, since the insulating material 121 of the P bus bar 105 is interposed between the insulating materials 111 of the N bus bar 104, the third portion 53 of the P bus bar 105 is naturally positioned in the X direction, and in this respect, the second welding is easily performed.

It should be considered that the embodiment described above is given as an example in terms of all aspects, and is not given for the purpose of limitation. The scope of the present invention is given in the scope of claims, rather than the embodiment described above, and it is intended that all modifications are included within the meaning and scope equivalent to the scope of claims.

Note that the present technology can have configurations such as the following.
(1) An inverter device including:
   a housing;
   a switching element mounted to an inner surface of the housing;
   a capacitor mounted to the inner surface side by side with the switching element in a first direction, the capacitor being connected to the switching element;
   a first bus bar extending along the first direction, the first bus bar connecting the switching element and the capacitor;
   a second bus bar located on a side opposite to the inner surface with the first bus bar interposed between the second bus bar and the inner surface, the second bus bar extending along the first direction, the second bus bar connecting the switching element and the capacitor;
   a first welding trace extending on the first bus bar in a second direction intersecting the first direction; and
   a plurality of second welding traces extending on the second bus bar in a direction along the second direction, the plurality of second welding traces being located on both sides of the first welding trace when viewed in a normal direction of the inner surface.
(2) The inverter device according to (1), in which
   each of the first bus bar and the second bus bar is a flat plate-shaped bus bar extending along the inner surface.
(3) The inverter device according to (1) or (2), in which
   the first welding trace is present at one position on the first bus bar, and
   the second welding traces are present at two positions on the second bus bar.
(4) The inverter device according to (3), in which
   the first welding trace is located at a center on the first bus bar in the first direction.
(5) The inverter device according to any one of (1) to (4), further including:
   a first insulating material covering a part of an entire width of a surface of the first bus bar facing the second bus bar, the entire width being defined as a width from the switching element to the capacitor; and
   a second insulating material covering a remaining part of a surface of the second bus bar facing the first bus bar, the remaining part being complementary to the part of the entire width.
(6) The inverter device according to (5), in which
   the first insulating material is provided at a position not overlapping the first welding trace, and
   the second insulating material is provided at a position not overlapping the second welding trace.
(7) The inverter device according to (5), in which
   the second insulating material is in surface contact with the first bus bar.
(8) A method for manufacturing an inverter device including:
   mounting a switching element and a capacitor to an inner surface of a housing as mounting, the capacitor being connected to the switching element side by side in a first direction;
   welding a first portion of a first bus bar on a side of the switching element and a second portion of the first bus bar on a side of the capacitor and thus forming the first bus bar as first welding, the first bus bar extending along the first direction and connecting the switching element and the capacitor; and
   welding a first portion of a second bus bar on a side of the switching element, a second portion of the second bus bar on a side of the capacitor, and a third portion connecting the first portion and the second portion at positions on both sides of a welded portion of the first bus bar when viewed in a normal direction of the inner surface as second welding, the second bus bar being located on a side opposite to the inner surface with the first bus bar interposed between the second bus bar and the inner surface, the second bus bar extending along the first direction and connecting the switching element and the capacitor.
(9) The method for manufacturing the inverter device according to (8), in which
   laser welding is used in the first welding and the second welding.
(10) The method for manufacturing the inverter device according to (8) or (9), in which
   the second bus bar includes an insulating material covering a part of a surface of the third portion facing the first bus bar, and
   the second welding is performed in a state where the third portion of the second bus bar is supported over the first bus bar by the insulating material.

### Reference Signs List

100, 110, 120: Inverter device
101: Housing
102: Power module
103: Film capacitor
104: N bus bar
105: P bus bar
106, 107: Welding trace
108: Bottom surface
111, 112, 121: Insulating material

## Claims

1. An inverter device comprising:
a housing;
a switching element mounted to an inner surface of the housing;
a capacitor mounted to the inner surface side by side with the switching element in a first direction, the capacitor being connected to the switching element;
a first bus bar extending along the first direction, the first bus bar connecting the switching element and the capacitor;
a second bus bar located on a side opposite to the inner surface with the first bus bar interposed between the second bus bar and the inner surface, the second bus bar extending along the first direction, the second bus bar connecting the switching element and the capacitor;
a first welding trace extending on the first bus bar in a second direction intersecting the first direction; and
a plurality of second welding traces extending on the second bus bar in a direction along the second direction, the plurality of second welding traces being located on both sides of the first welding trace when viewed in a normal direction of the inner surface.

2. The inverter device according to claim 1, wherein
each of the first bus bar and the second bus bar is a flat plate-shaped bus bar extending along the inner surface.

3. The inverter device according to claim 1, wherein
the first welding trace is present at one position on the first bus bar, and
the second welding traces are present at two positions on the second bus bar.

4. The inverter device according to claim 3, wherein
the first welding trace is located at a center on the first bus bar in the first direction.

5. The inverter device according to claim 1, further comprising:
a first insulating material covering a part of an entire width of a surface of the first bus bar facing the second bus bar, the entire width being defined as a width from the switching element to the capacitor; and
a second insulating material covering a remaining part of a surface of the second bus bar facing the first bus bar, the remaining part being complementary to the part of the entire width.

6. The inverter device according to claim 5, wherein
the first insulating material is provided at a position not overlapping the first welding trace, and
the second insulating material is provided at a position not overlapping the second welding trace.

7. The inverter device according to claim 5, wherein
the second insulating material is in surface contact with the first bus bar.

8. A method for manufacturing an inverter device comprising:
mounting a switching element and a capacitor to an inner surface of a housing as mounting, the capacitor being connected to the switching element side by side in a first direction;
welding a first portion of a first bus bar on a side of the switching element and a second portion of the first bus bar on a side of the capacitor and thus forming the first bus bar as first welding, the first bus bar extending along the first direction and connecting the switching element and the capacitor; and
welding a first portion of a second bus bar on a side of the switching element, a second portion of the second bus bar on a side of the capacitor, and a third portion connecting the first portion and the second portion at positions on both sides of a welded portion of the first bus bar when viewed in a normal direction of the inner surface as second welding, the second bus bar being located on a side opposite to the inner surface with the first bus bar interposed between the second bus bar and the inner surface, the second bus bar extending along the first direction and connecting the switching element and the capacitor.

9. The method for manufacturing the inverter device according to claim 8, wherein laser welding is used in the first welding and the second welding.

10. The method for manufacturing the inverter device according to claim 8, wherein
the second bus bar includes an insulating material covering a part of a surface of the third portion facing the first bus bar, and
the second welding is performed in a state where the third portion of the second bus bar is supported over the first bus bar by the insulating material.
